# EUROPEAN PATENT APPLICATION

(11) **EP 3 113 019 A1**
(43) Date of publication of application: **04.01.2017**
(21) Application number: 16159751.3
(22) Date of filing: 10.03.2016
(51) Int. Cl.: G06F 9/445, G06F 9/455

(54) **POLICY-BASED COMPRESSION OF MACHINE CODE GENERATED BY A VIRTUAL MACHINE**

(30) Priority: 29.06.2015 US 201562186144 P; 07.12.2015 US 201514960644
(71) Applicant: MediaTek, Inc, Hsin-Chu 300 (TW)
(72) Inventor: Tsao, Jen-Ming, 231 New Taipei City (TW); Tsai, Hsien-Ming, 351 Taiwan (TW); Chung, Wen-Chin, 302 Taiwan (TW)
(74) Representative: Wright, Howard Hugh Burnby

(57) **Abstract**

A computing system performs a policy-based machine code compression method. The computing system hosts a virtual machine that generates machine code from bytecode. The computing system determines whether to compress the machine code file according to a set of conditions specified by a policy. If the set of conditions is satisfied, the machine code file is compressed. For system booting and package installation, the machine code file can be deleted to save storage. When launching an application, the compressed machine code file is decompressed for execution. When the application process terminates, the decompressed machine code file can be deleted. The machine code file compression can be performed on a mobile device to save storage, or on a host when building a system image to reduce download time. Parallel compression and decompression algorithms can be used for the machine code file compression and decompression in a multi-core computing system.

## Description

This application claims the benefit of U.S. Provisional Application No. 62/186,144 filed on June 29, 2015 and U.S. Patent Application No. 14/960,644 filed on 7 December 2015.

### TECHNICAL FIELD

Implementations of the disclosure relate to software management in a computing system that hosts a virtual machine.

### BACKGROUND

A virtual machine (VM) is a software emulating implementation of a machine (e.g., a computer) for executing high level programs. A VM provides a platform-independent programming environment that abstracts away details of the underlying hardware or operating system (OS), and allows a high level program to execute in the same way on any platform. One type of VM, sometimes called a Managed Runtime Environment (MRE), runs on top of a host OS to provide an emulation environment for a single process. For VM emulating, high level program (e.g., JAVA) is compiled into a specific bytecode format. To execute on a real hardware machine (e.g., ARM processors, x86 processors, etc.), the bytecode is either compiled or interpreted by a VM to executable machine code.

Android is a commonly-used mobile framework based on the Linux kernel. Android Runtime (ART) is the VM used by some applications and system services in Android. ART as the runtime executes its bytecode in the Dalvik Executable (DEX) format to generate machine code for the target device. A DEX file (.dex) holds a set of class definitions and their associated data. The predecessor of ART, Dalvik, had evolved over the years from a runtime interpreter into a Just-in-Time (JIT) compiler. During the application runtime, the JIT compiler generates and caches a subset of the executable machine code that was executed most frequently. A more recent version of Dalvik performs runtime verification and optimization by converting a DEX file into an optimized DEX file (.odex). By contrast, ART introduces the use of ahead-of-time (AOT) compilation by statistically pre-compiling an application into native machine code upon its first installation, first booting or first launching. Compared to Dalvik, ART improves the overall execution efficiency and reduces power consumption, which results in improved battery autonomy on mobile devices. At the same time, ART brings faster execution of applications, improved memory allocation and garbage collection (GC) mechanisms, new applications debugging features, and more accurate high-level profiling of applications.

ART pre-compiles an application into native machine code by using an on-device utility called dex2oat. This utility accepts an application package with DEX files as input and generates a compiled machine code file executable by the target device. The machine code file is native binary code for a specific hardware processor, and is formatted as Executable and Linkable Format (ELF). For ART, its filename has oat as the postfix.

However, the computing time for dex2oat is non-negligible, especially when the system boots for the first time or when an application is installed for the first time. Furthermore, the resulting machine code (ELF file) takes a significantly larger amount of storage space (e.g., 2-3 times more per application) than a DEX bytecode file. Thus, providing ART on low-cost devices with small storage, such as typical mobile devices, remains a challenge to hardware and software developers.

### SUMMARY

In one implementation, a method is provided for policy-based compression of a machine code file. The method comprises the steps of: generating the machine code file from bytecode by a virtual machine hosted in a computing system; determining whether to compress the machine code file according to a set of conditions specified by a policy; and in response to a determination that the set of conditions is satisfied, compressing the machine code file to a compressed machine code file in the computing system.

In one implementation, a computing system is provided for policy-based compression of a machine code file. The system comprises one or more processors; a (volatile) memory; a (non-volatile) storage; and an interconnect coupled to the memory and the one or more processors. The one or more processors are adapted to: generate the machine code file from bytecode by a virtual machine hosted in the computing system; determine whether to compress the machine code file according to a set of conditions specified by a policy; and in response to a determination that the set of conditions is satisfied, compress the machine code file to a compressed machine code file in the computing system.

In some implementations, for system booting and package installation, the machine code file can be deleted to save storage. When launching an application, the compressed machine code file is decompressed for execution. When the application process terminates, the decompressed machine code file can be deleted. The machine code file compression and deletion can be performed on a mobile device to save its storage space, or on a host to reduce a system image size for decreasing the download time. Parallel file compression and decompression algorithms can be used for compressing and decompressing the machine code file in a multi-core computing system to speed up the time of system booting, the application installation, and the application launching. Alternatively, compression and decompression algorithms can be performed by an additional compression circuitry.

### BRIEF DESCRIPTION OF THE DRAWINGS

The present disclosure is illustrated by way of example, and not by way of limitation, in the figures of the accompanying drawings in which like references indicate similar elements. It should be noted that different references to "an" or "one" implementation in this disclosure are not necessarily to the same implementation, and such references mean at least one. Further, when a particular feature, structure, or characteristic is described in connection with an implementation, it is submitted that it is within the knowledge of one skilled in the art to effect such feature, structure, or characteristic in connection with other implementations whether or not explicitly described.
Figure 1 illustrates Android software architecture according to one implementation.
Figure 2 illustrates a computing system according to one implementation.
Figure 3 illustrates a computing system according to another implementation.
Figure 4 is a flow diagram providing an overview of a method for policy-based compression of machine code according to one implementation.
Figure 5 is a flow diagram illustrating a method for policy-based compression of machine code during system booting or package installation, according to one implementation.
Figure 6 illustrates a system booting process according to one implementation.
Figure 7 illustrates a package installation process according to one implementation.
Figure 8 is a flow diagram illustrating a method for policy-based compression of machine code when launching an application according to one implementation.
Figure 9 illustrates an application launching process according to one implementation.
Figure 10 is a flow diagram illustrating a method for policy-based compression of machine code when an application process terminates according to one implementation.
Figure 11 illustrates a system image building process according to one implementation.
Figure 12 is a flow diagram illustrating a method for policy-based compression of machine code according to one implementation.

### DETAILED DESCRIPTION

In the following description, numerous specific details are set forth. However, it is understood that implementations of the disclosure may be practiced without these specific details. In other instances, well-known circuits, structures and techniques have not been shown in detail in order not to obscure the understanding of this description. It will be appreciated, however, by one skilled in the art, that the disclosure may be practiced without such specific details. Those of ordinary skill in the art, with the included descriptions, will be able to implement appropriate functionality without undue experimentation.

Implementations of the disclosure provide a method and system for policy-based compression of machine code generated by a VM. In one implementation, the method is performed by a mobile device system to save its storage space and to speed up system performance when booting the system, installing a package, launching an application, or other system events. The method can also be performed by a host computing system, e.g., when building a system image, to reduce the system image size for faster download time, such as download by flash tools or over-the-air (OTA) download. The system determines whether to compress a compiled machine code file based on a policy that specifies a set of one or more conditions. The machine code file is compressed if the set of conditions is satisfied. In some implementations, after the machine code file is compressed and saved in the storage, the original machine code file (that was compiled from the bytecode before compression) can be deleted for saving storage. When launching an application, if a compressed machine code file exists, the compressed machine code file is decompressed into a machine code file for execution. When the application process terminates (e.g., stopped by a user or killed by the system), the decompressed machine code file can be deleted from the system to save its storage space.

In some implementations, the compression and decompression may be executed according to a parallel compression algorithm by multiple cores of a multi-core processor, or by special-purpose compression/decompression hardware, to reduce the time required for system booting, package installation, application launching, system image building and other system events.

In the following description, the policy-based compression is described in the context of Android software. It should be understood, however, the policy-based compression may be implemented in any software environment that provides virtual machines for bytecode to machine code translation or compilation. Furthermore, although specific bytecode and machine code file formats, programming languages and utilities are mentioned in the following description, it is understood that the policy-based compression may apply to any bytecode and machine code file formats, programming languages and utilities. In some parts of the following description, Java application programming language and its related software framework are used as examples; however, it is understood that the policy-based compression may be applied to machine code generated by virtual machines that are based on another programming language different from Java.

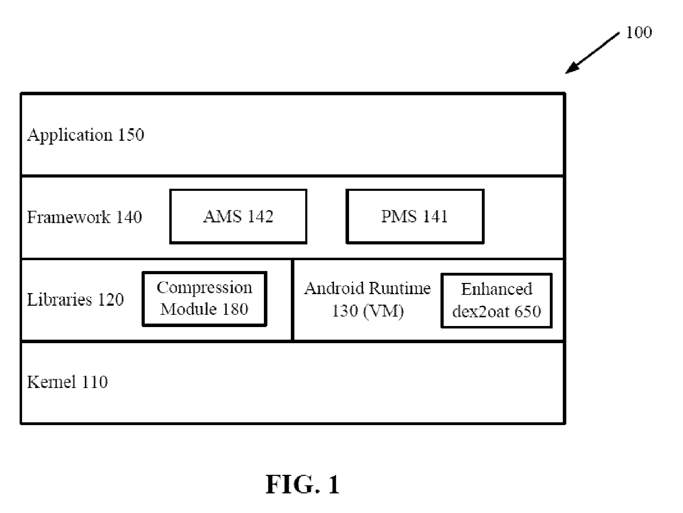

Figure 1 illustrates Android software architecture 100 according to one implementation. The architecture 100 consists of five layers. (1) Kernel 110 (e.g., a Linux kernel), which is responsible for basic system functionalities, such as process management, memory management, power management, resource access, and device drivers. (2) Libraries 120, which provide a set of native libraries written in C or C++ programming languages, including libc, SQLite, WebKit, etc. In one implementation, the libraries 120 include compression module 180 that may be used for compression and decompression of the machine code file. (3) Android Runtime 130, which is a VM with core libraries to execute application programs (e.g., Java code). In addition, it provides an enhanced dex2oat tool 650 for generating the machine code file from its DEX bytecode. (4) Android framework 140, which provides higher-level services to applications by Java classes and interfaces. Examples of the services include, but are not limited to, Package Manager Service (PMS) 141 and Activity Manger Service (AMS) 142. Specifically, PMS 141 is responsible for managing, installing and un-installing application packages, and AMS 142 is responsible for managing all activities for interacting with users. (5) Applications 150, which are programs in high-level programming languages (e.g., Java).

With respect to the Applications 150, typically the Applications 150 are distributed and installed as Android application packages with a package file format .apk. A package includes Java programs and necessary files with compression, e.g., in a zip format. In general, a package (.apk file) includes classes.dex, which is Dalvik bytecode containing compiled .class files; AndroidManifest.xml, which is a binary file containing package information; resources.arsc, which contains a compiled resource file; a directory Res\, which contains uncompiled resource files; and a directory META-INF\, which is used to certify an application for .apk completeness and security.

In one implementation, for the policy-based compression of machine code, the Android software architecture 100 includes the enhanced dex2oat tool 650 with policy-based compression in Android Runtime 130 and compression module 180 in Libraries 120. Compression module 180 can be used to compress and decompress machine code files. Although the compression module 180 is shown in Figure 1 as part of the libraries 120, in alternative implementations the compression module 180 may be in a different layer of the architecture 100. For the policy-based compression of machine code, the compression module 180 may be invoked when a set of one or more conditions is satisfied, where the set of conditions is specified in a policy in enhanced dex2oat 650. Examples of the conditions include, but are not limited to: the machine code file is not from a specific system package, the machine code file is not from a frequently-used (i.e., exceeding a predetermined frequency threshold) application package, the package filename matches any name in a specific name list, the package filename matches a keyword in a specific keyword list, the package filename is not in a white list, the package filename is in a black list, whether this application package is predicted to be not used immediately after installation (i.e., not used within a predetermined time period), etc. For example, according to one policy, the machine code file is compressed if its package filename is in a black list and is not from a frequently-used application package; according to another policy, the machine code is not compressed if the package filename contains the keyword "android" (which is an indication of frequent usage). A policy may specify a combination of any number of the above conditions.

In one implementation, the same policy with the same set of conditions may be used for different system events such as system booting, package installation, application launching, application process termination and system image building. In alternative implementations, policies with different sets of conditions may be used for these different events. In yet alternative implementations, some of the events may use the same policy with the same set of conditions, while some others of the events may use policies with different sets of conditions.

In one implementation, the compression module 180 may be called by an enhanced bytecode compilation tool, which is used in ART Runtime 130 to perform not only bytecode to machine code translation but also the policy-based compression of machine code file. An example of the enhanced translation tool in Android is the enhanced dex2oat tool 650, which will be described in further detail below.

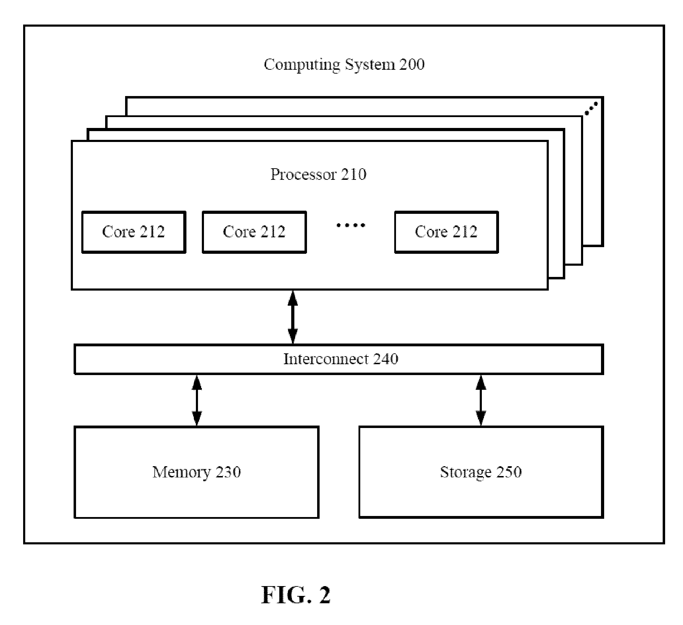

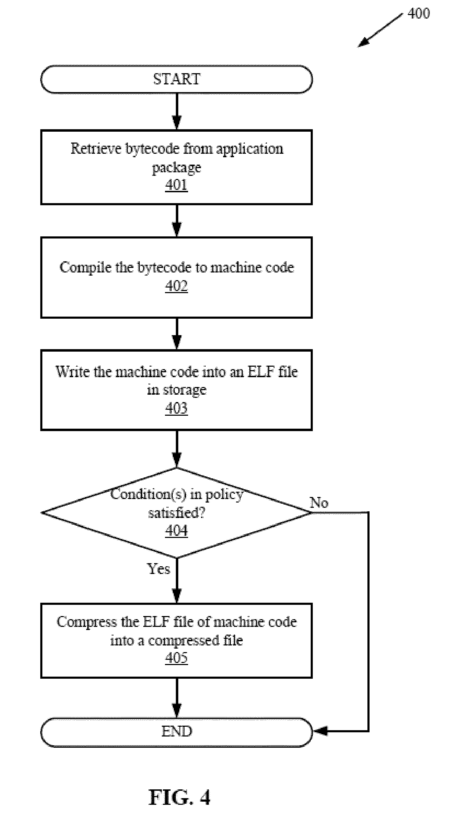

Figure 2 illustrates a computing system 200 that performs the policy-based compression according to one implementation. The computing system 200 includes one or more processors 210 (also referred to as central processing units (CPUs)), and each processor includes one or more cores 212. The computing system 200 may be part of a mobile device or a host computer. Each core 212 executes machine code. In one implementation, each core 212 hosts one or more VMs for executing applications in a software emulation environment, such as the Android software architecture 100 shown in Figure 1. The computing system 200 further includes a volatile memory 230 (e.g., dynamic random-access memory (DRAM)) for storing code and data, which can be fast accessed during code execution. The computing system 200 further includes a non-volatile storage 250 (e.g., flash storage, a magnetic data storage device, an optical magnetic data storage device, etc.) for storing the system image, application packages (e.g., .apk files), data-cache files, etc. The computing system 200 also includes an interconnect 240 (also referred to as a "bus" in some systems) to interconnect the processors 210, the memory 230 and the storage 250. In some implementations, the computing system 200 also includes peripheral devices such as a display, a camera, a modem, a network interface, etc. In one implementation, one or more cores 212 of the computing system 200 perform the policy-based compression of machine code as will be described in detail in connection with Figures 4-12.

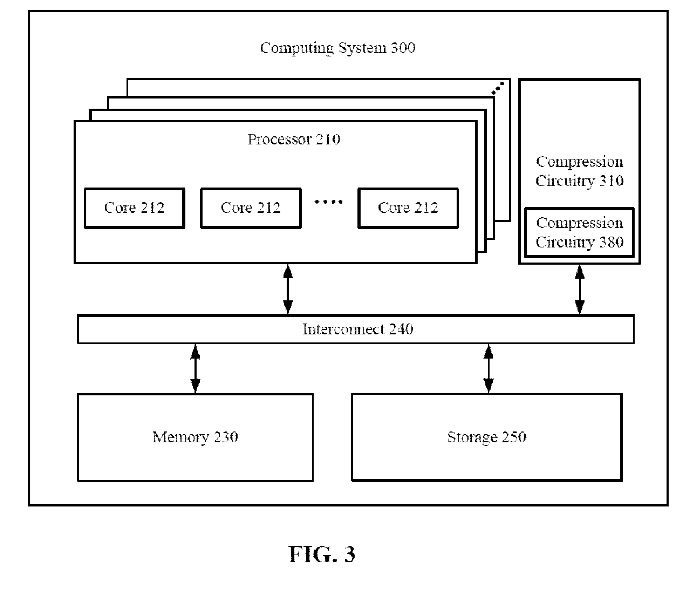

Figure 3 illustrates a computing system 300 that performs the policy-based compression according to another implementation. In addition to the one or more processors 210, the memory 230, the storage 250 and the interconnect 240 that are shown in Figure 2, the computing system 300 also include special-purpose compression circuitry 310 for compression and decompression. In one implementation, the compression circuitry 310 may be one or more coprocessors (e.g., Single-Instruction-Multiple-Data (SIMD) processors such as ARM® NEON), graphic processing units (GPUs), or an Application-Specific Integrated Circuit (ASIC). In one implementation, the compression circuitry 310 may be used for performing the policy-based machine code file compression as will be described in detail in connection with Figures 4-12.

In one implementation, each of the computing systems 200 and 300 could be part of a mobile computing and/or communication device (e.g., a smartphone, a tablet, laptop, etc.). In one implementation, each of the computing systems 200 and 300 could be a host computer, or a part of a cloud server system.

In one implementation, the compression module 180 of Figure 1, as well as the compression circuitry 310 of Figure 3, may perform machine code file compression and decompression according to a file compression algorithm. Different file compression algorithms have different compression rates (i.e., the ratio of compressed file size vs. original file size), compression speed, and decompression speed. Examples of general compression algorithms include, but are not limited to: GZIP, ZIP, BZIP2, LZMA, LZH, etc. These general algorithms are typically slow in decompression and compression speed. Alternatively, parallel algorithms for multi-core processors, e.g., PIGZ (which is a parallel implementation of gzip for multiple cores), LBZIP2, PBZIP2, PLZIP, P7ZIP, etc. These parallel algorithms of compression and decompression typically have faster speed than the general algorithms in a multi-core processor environment, such as the computing system 200 of Figure 2 and the computing system 300 of Figure 3.

Figure 4 is a flow diagram providing an overview of a method 400 for policy-based compression of machine code according to one implementation. The method 400 may be performed by a computing system, such as the computing system 200 of Figure 2, or the computing system 300 of Figure 3. The method 400 starts with step 401 at which the computing system retrieves bytecode from an application package. At step 402, the computing system compiles (i.e., translates) the bytecode to machine code. In one implementation, the bytecode compilation is performed by a VM hosted in the computing system. At step 403, the computing system writes the machine code into an ELF file in storage. In short, from steps 401 to 403, the ELF file for machine code is generated from bytecode by a VM hosted in a computing system. Taking ART as example, these steps of the prior art are performed by an original dex2oat tool. At step 404, the computing system determines whether a set of one or more conditions specified in a policy is satisfied. If satisfied, the ELF file of the machine code is compressed into a compressed file at step 405 and the method 400 ends. If the set of one or more conditions specified in the policy is not satisfied, the method 400 ends without the compression.

After the compression of the machine code file, the original (i.e., uncompressed) machine code file may be deleted if the method 400 is invoked for certain events, such as system booting or package installation. Thus, the original machine code file can be deleted to save storage space, and the compressed machine code file is stored for future use. It is noted that, the original machine code file may be kept in storage without being deleted for the special case that it is known or predicted that the machine code execution is immediate (e.g., within a predetermined time period) or frequent (i.e., above a predetermined frequency threshold), such as when an application is just installed for launching. It is understood that other events not mentioned herein may also cause the original machine code file to be deleted, or to be kept in storage.

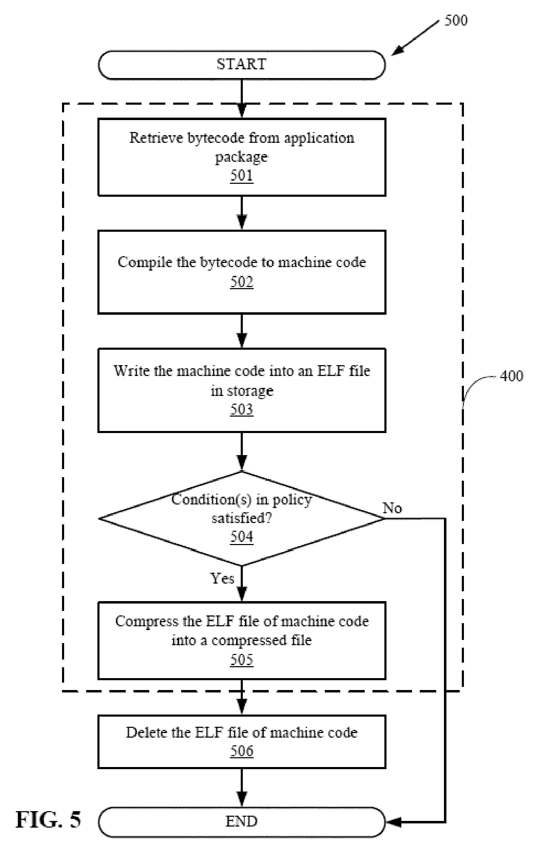

Figure 5 is a flow diagram illustrating a method 500 for policy-based compression of machine code during system booting or package installation, according to one implementation. The method 500 may be performed by a computing system, such as the computing system 200 of Figure 2, or the computing system 300 of Figure 3. The method 500 includes steps 501-505 that are the same as steps 401-405 of the method 400 of Figure 4, respectively. At step 504, it is determined whether one or more conditions specified in a policy are satisfied. If not, the method 500 ends. If the one or more conditions specified in the policy are satisfied at step 504, the method 500 additionally includes step 506 after step 505, which deletes the ELF file of the machine code after the compression.

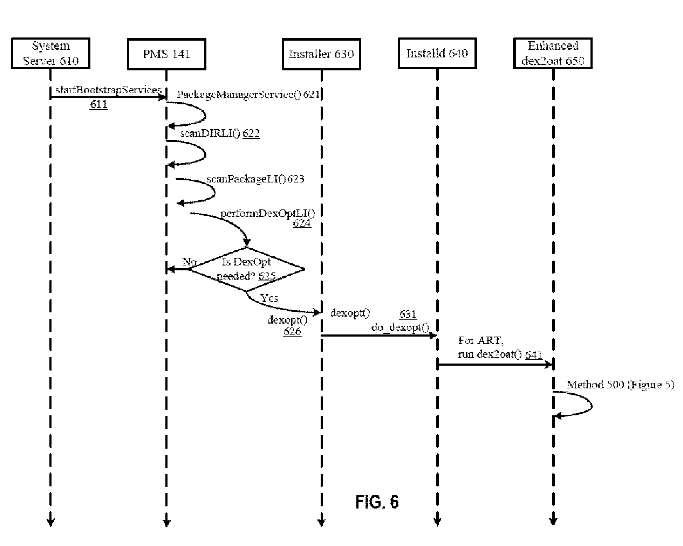

Figure 6 illustrates a system booting process 600 that performs the method 500 according to one implementation. The process 600 utilizes an enhanced dex2oat tool 650 to perform bytecode to machine code compilation and policy-based compression of machine code during system booting in Android. When booting the system, a system server 610 issues StartBootstrapServices command 611 to PMS 141 (Figure 1). PMS 141 then invokes PackageManagerService() function 621, which in turn calls a sequence of functions, such as scanDirLI() 622, scanPackageLI() 623 and performDexOptLI() 624. For performDexOptLI() 624, PMS 141 checks whether it is necessary to optimize the bytecode file (e.g., IsDexOptNeeded()) at step 625. If it is not necessary, then no optimization is performed. If it is necessary to perform the optimization, PMS 141 calls dexopt() 626 to Installer 630. Next, Installer 630 performs do_dexopt() 631 to Installd 640 (a daemon running in the background).

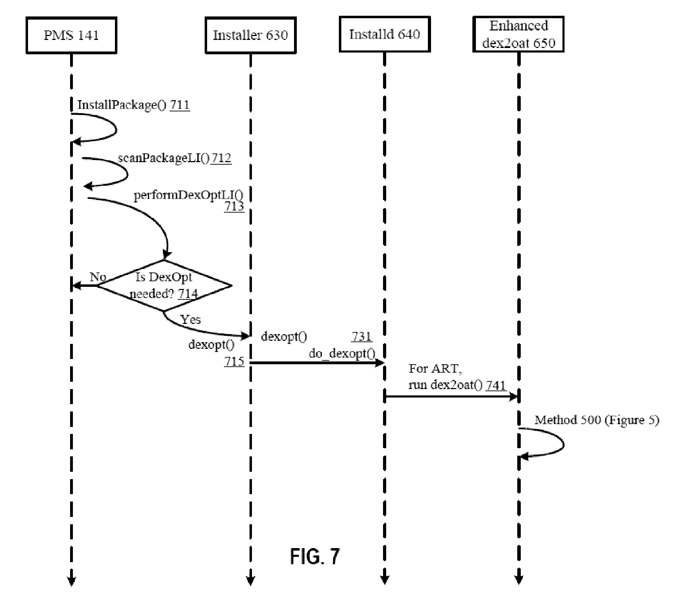

Then, Installd 640 invokes dex2oat 641 to enhanced dex2oat 650 if the runtime environment is ART. Finally, the enhanced dex2oat 650 performs the method 500 described in Figure 5. Figure 7 illustrates a package installation process 700 that also performs the method 500 according to one implementation. The process 700 also utilizes the enhanced dex2oat tool 650 to perform bytecode to machine code compilation and policy-based machine code file compression during package installation in Android. When installing a package installation, PMS 141 (Figure 1) calls a sequence of functions, such as installPackage() 711, scanPackageLI() 712 and performDexOptLI() 713. For performDexOptLI() 713, PMS 141 checks whether it is necessary to optimize the bytecode file (e.g., IsDexOptNeeded()) at step 714. If it is not necessary, then no optimization is performed. If it is necessary to perform the optimization, PMS 141 calls dexopt() 715 to Installer 630 perform. Next, Installer 630 performs do_dexopt() 731 to Installd 640. Then, Installd 640 invokes dex2oat 741 to enhanced dex2oat 650 if the runtime environment is ART. Then the bytecode file is translated into a machine code file (e.g., in the .oat format) by invoking dex2oat 741. Finally, the enhanced dex2oat 650 performs the method 500 described in Figure 5.

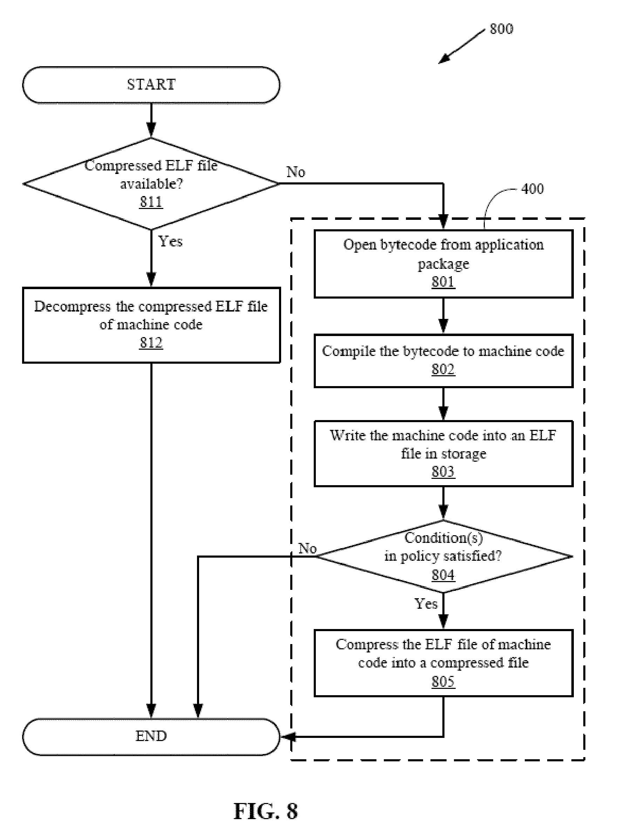

Figure 8 is a flow diagram illustrating a method 800 for policy-based machine code file compression when launching an application according to one implementation. The method 800 may be performed by a computing system, such as the computing system 200 of Figure 2, or the computing system 300 of Figure 3. The method 800 starts with the computing system checking its storage whether a compressed ELF file for the application is available at step 811. If it is available, the compressed ELF file is decompressed for launching at step 812. If it is not available, the computing system performs the method 400 of Figure 4. In one implementation, the method 800 is performed when an application was installed a while ago; e.g., N minutes ago, where N is a predetermined number. For an application that was installed recently (e.g., within the last N minutes), this application can be launched directly without the method 800 being performed.

More specifically, if a compressed ELF file for the application is not available, the computing system retrieves bytecode from an application package at step 801. At step 802, the computing system compiles (i.e., translates) the bytecode to machine code. In one implementation, the bytecode compilation is performed by a VM hosted in the computing system. At step 803, the computing system writes the machine code into an ELF file in storage. At step 804, the computing system determines whether a set of one or more conditions specified in a policy is satisfied. If satisfied, the ELF file of the machine code is compressed into a compressed file at step 805 and the method 800 ends. If the set of one or more conditions specified in the policy is not satisfied, the method 800 ends without the compression.

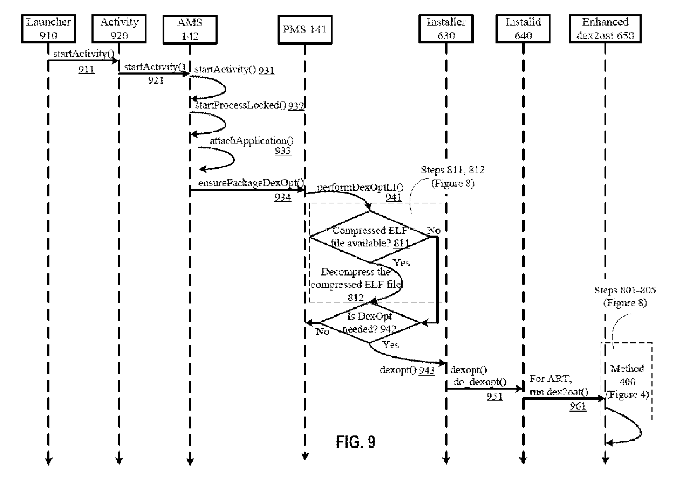

Figure 9 illustrates a process 900 that performs the method 800 according to one implementation. The process 900 also utilizes the enhanced dex2oat tool 650 to perform bytecode to machine code compilation and policy-based compression of machine code when launching an application in Android. When launching an application, Launcher 910 initiates startActivity() 911 to Activity 920. Activity 920 calls the startActivity() function 921. Next, AMS 142 (Figure 1) calls a sequence of functions, such as startActivity() 931, startProcessLocked() 932 and attachApplication() 933. AMS 142 also invokes ensurePackageDexOpt() 934, which causes PMS 141 to invoke performDexOptLI() 941. Then, PMS 141 checks its storage whether a compressed ELF file for the application is available at steps 811. If it is available, the compressed ELF file is decompressed for launching at step 812. If it is not available, the computing system performs the step 942.

PMS 141 further checks whether it is necessary to optimize the bytecode file (e.g., IsDexOptNeeded()) at step 942. If it is not necessary, then no optimization is performed. If it is necessary to perform the optimization, PMS 141 calls dexopt() 943 to Installer 630. Next, Installer 630 performs do_dexopt() 951 to Installd 640. Then, Installd 640 invokes dex2oat 961 to enhanced dex2oat 650 if the runtime environment is ART. Finally, the enhanced dex2oat 650 performs the method 400 described in Figure 4, which includes the same steps as steps 801-805 of the method 800 in Figure 8.

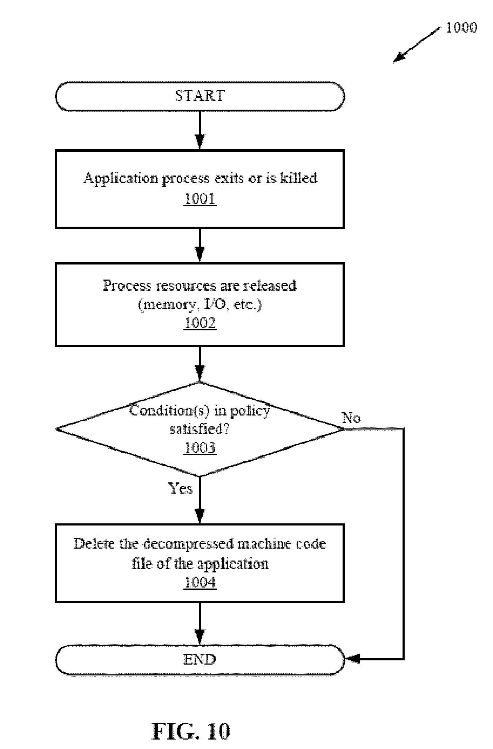

Figure 10 is a flow diagram illustrating a method 1000 for policy-based compression of machine code when an application process terminates according to one implementation. The method 1000 may be performed by a computing system, such as the computing system 200 of Figure 2, or the computing system 300 of Figure 3. The method 1000 for an application process termination is performed after the application is launched according to the method 800 of Figure 8.

In one implementation, the method 1000 starts when the application process terminates (e.g., when the application is stopped by a user or killed by the system) at step 1001. At step 1002, the process resources (e.g., memory, I/O, etc.) are released. At step 1003, the computing system determines whether a set of one or more conditions of a predetermined policy is satisfied. If satisfied, the decompressed machine code file is deleted at step 1004 and the method 1000 ends.

If the set of one or more conditions is not satisfied, the method 1000 ends without deleting the decompressed machine code file. In one implementation, the policy used in method 1000 may contain a combination of any of the aforementioned conditions, and may additionally include a prediction of whether the decompressed machine code will be immediately used again (i.e., within a predetermined time period).

The methods and processes of Figure 5-10 describe policy-based compression of machine code typically performed on a mobile device. The policy-based compression of machine code may also be implemented on a host computer (e.g., a server computer); e.g., for building a system image. In one implementation, the method 400 described in Figure 4 may be used by a host computer to compress a set of machine code files selected to form a system image for downloading to a device (e.g., a mobile device). By compressing the selected machine code files in the system image ahead of time, the total size of the system image is reduced. The compression improves the download time by a flash tool or by OTA technologies. For OTA, the compression further saves the download bandwidth of radio resource.

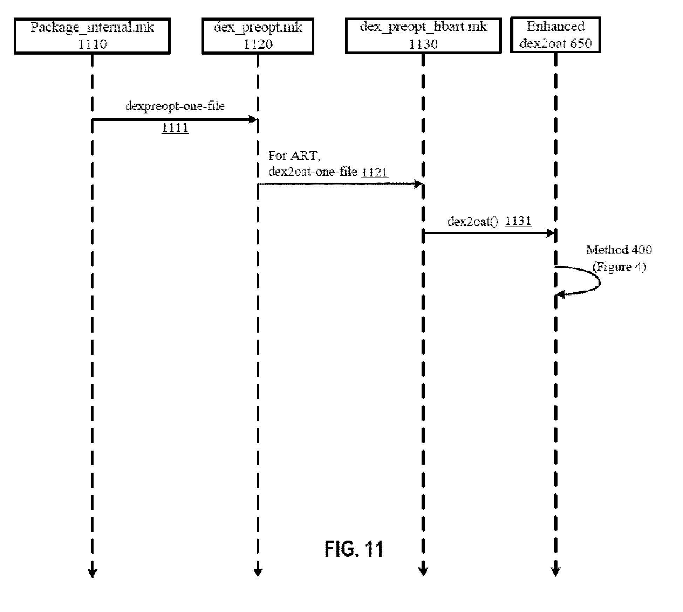

Figure 11 illustrates a system image building process 1100 that performs the method 400 according to one implementation for building a system image on a host. The process 1100 utilizes the enhanced dex2oat tool to perform bytecode to machine code compilation and policy-based machine code file compression when building a system image in Android.

The process 1100 starts when Package_internal.mk 1110 is invoked to perform dexpreopt-one-file 1111. For ART, this causes dex_preopt.mk 1120 to perform dex2oat-one-file 1121. Next, this invokes dex_preopt_libART.mk 1130 to call dex2oat() 1131. Finally, the enhanced dex2oat 650 performs the method 400 described in Figure 4.

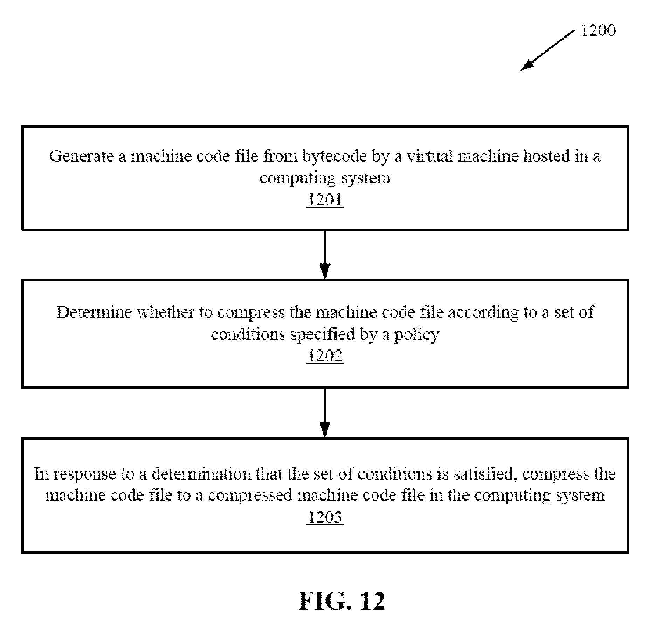

Figure 12 is a flow diagram illustrating a method 1200 for policy-based machine code file compression according to one implementation. The method 1200 may be performed by a computing system, such as the computing system 200 of Figure 2, or the computing system 300 of Figure 3. The method 1200 starts when a VM hosted in a computing system generates a machine code file from bytecode at step 1201. The computing system then determines, at step 1201, whether to compress the machine code file according to a set of conditions specified by a policy. In response to a determination that the set of conditions is satisfied, the machine code file is compressed to a compressed machine code file in the computing system at step 1203.

It is to be understood that the above description is intended to be illustrative, and not restrictive. Many other implementations will be apparent to those of skill in the art upon reading and understanding the above description. Although the present disclosure has been described with reference to specific exemplary implementations, it will be recognized that the disclosure is not limited to the implementations described, but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### The invention may also be defined by means of the following clauses:

1. A method for policy-based compression of a machine code file, comprising the steps of:
   generating the machine code file from bytecode by a virtual machine hosted in a computing system;
   determining whether to compress the machine code file according to a set of conditions specified by a policy; and
   in response to a determination that the set of conditions is satisfied, compressing the machine code file to a compressed machine code file in the computing system.
2. The method of clause 1, wherein compressing the machine code file further comprises the step of:
   deleting the machine code file from the computing system when booting the computing system.
3. The method of clause 1, wherein compressing the machine code file further comprises the step of:
   deleting the machine code file from the computing system when installing an application package.
4. The method of clause 1, further comprising:
   determining whether the compressed machine code file is stored in the computing system when launching an application; and
   decompressing the compressed machine code file into the machine code for execution in response to a determination that the compressed machine code file is stored in the computing system.
5. The method of clause 4, further comprising:
   in response to a determination that the compressed machine code file is not stored in the computing system, retrieving the bytecode of the application from an application package before the step of generating the machine code.
6. The method of clause 4, wherein decompressing the machine code file further comprises:
   decompressing the compressed machine code file by multiple cores of the computing system in parallel according to the parallel decompression algorithm.
7. The method of clause 1, further comprising:
   detecting when an application process terminates;
   determining whether to delete a decompressed machine code file of the application according to a second set of one or more conditions specified by a second policy; and
   in response to a determination that the second set of one or more conditions is satisfied, deleting the decompressed machine code file in the computing system.
8. The method of clause 1, wherein the computing system is a host computer, the method further comprising:
   selecting the compressed file as part of a system image for downloading to mobile devices.
9. The method of clause 1, wherein the policy specifies the set of conditions including one or more of the following:
   the machine code file is not from a specific system package, the machine code file is not from a frequently-used application package, the system package filename or the application package filename does not match any name in a specific name list, the package filename does not match a keyword in a specific keyword list, the package filename is not in a white list, the package filename is in a black list, the application package is predicted to be not used immediately after installation.
10. The method of clause 1, wherein compressing the machine code file further comprises:
   compressing the machine code file by multiple cores of the computing system in parallel according to a parallel compression algorithm; and
   decompressing the compressed machine code file by the multiple cores of the computing system in parallel according to the parallel compression algorithm.
11. The method of clause 1, wherein the computing system is in a mobile device and the step of determining is performed during one or more of the following events: system booting, package installation and application launching.
12. A computing system for policy-based compression of a machine code file, comprising:
   a memory;
   one or more processors; and
   an interconnect coupled to the memory and the one or more processors,
   wherein the one or more processors are adapted to:
   generate the machine code file from bytecode by a virtual machine hosted in the computing system;
   determine whether to compress the machine code file according to a set of conditions specified by a policy; and
   in response to a determination that the set of conditions is satisfied, compress the machine code file to a compressed machine code file in the computing system.
13. The computing system of clause 12, wherein the one or more processors are further adapted to:
   delete the machine code file from the computing system after compressing the machine code file when booting the computing system.
14. The computing system of clause 12, wherein the one or more processors are further adapted to:
   delete the machine code file from the computing system after compressing the machine code file when installing an application package from which the bytecode is retrieved.
15. The computing system of clause 12, wherein the one or more processors are further adapted to:
   determine whether the compressed machine code file is stored in the computing system when launching an application; and
   decompress the compressed machine code file into the machine code for execution in response to a determination that the compressed machine code file is stored in the computing system.
16. The computing system of clause 15, wherein the one or more processors are further adapted to:
   decompress the compressed machine code file by multiple cores of the computing system in parallel according to the parallel decompression algorithm.
17. The computing system of clause 15, wherein the one or more processors are further adapted to:
   in response to a determination that the compressed machine code file is not stored in the computing system, retrieve the bytecode of the application from an application package before generating the machine code.
18. The computing system of clause 12, wherein the one or more processors are further adapted to:
   detect when a process of an application terminates,
   determine whether to delete a decompressed machine code file of the application according to a second set of one or more conditions specified by a second policy; and
   in response to a determination that the second set of one or more conditions is satisfied, deleting the decompressed machine code file in the computing system.
19. The computing system of clause 12, wherein the computing system is a host computer, the one or more processors are further adapted to select the machine code file to be part of a system image for downloading to mobile devices.
20. The computing system of clause 12, wherein the policy specifies the set of conditions including one or more of the following:
   the machine code file is not from a specific system package, the machine code file is not from a frequently-used application package, the system package filename or the application package filename does not match any name in a specific name list, the package filename does not match a keyword in a specific keyword list, the package filename is not in a white list, the package filename is in a black list, the application package is predicted to be not used immediately after installation.
21. The computing system of clause 12, further comprising multiple cores in the one or more processors, the multiple cores adapted to:
   compress the machine code file in parallel according to a parallel compression algorithm; and
   decompress the compressed machine code file in parallel according to the parallel compression algorithm.
22. The computing system of clause 12, wherein the computing system is in a mobile device, which determines whether to compress the machine code file during one or more of the following events: system booting, package installation and application launching.
23. The computing system of clause 12, further comprising:
   special-purpose compression circuitry coupled to the interconnect to compress the machine code file.

## Claims

1. A method for policy-based compression of a machine code file, comprising the steps of:
generating the machine code file from bytecode by a virtual machine hosted in a computing system;
determining whether to compress the machine code file according to a set of conditions specified by a policy; and
in response to a determination that the set of conditions is satisfied, compressing the machine code file to a compressed machine code file in the computing system.

2. The method of claim 1, wherein compressing the machine code file further comprises the step of:
deleting the machine code file from the computing system when booting the computing system.

3. The method of claim 1, wherein compressing the machine code file further comprises the step of:
deleting the machine code file from the computing system when installing an application package.

4. The method of claim 1, further comprising:
determining whether the compressed machine code file is stored in the computing system when launching an application; and
decompressing the compressed machine code file into the machine code for execution in response to a determination that the compressed machine code file is stored in the computing system.

5. The method of claim 4, further comprising:
in response to a determination that the compressed machine code file is not stored in the computing system, retrieving the bytecode of the application from an application package before the step of generating the machine code.

6. The method of any one of the preceding claims, further comprising:
detecting when an application process terminates;
determining whether to delete a decompressed machine code file of the application according to a second set of one or more conditions specified by a second policy; and
in response to a determination that the second set of one or more conditions is satisfied, deleting the decompressed machine code file in the computing system.

7. The method of any one of the preceding claims, wherein the computing system is a host computer, the method further comprising:
selecting the compressed file as part of a system image for downloading to mobile devices.

8. The method of any one of the preceding claims, wherein the policy specifies the set of conditions including one or more of the following:
the machine code file is not from a specific system package, the machine code file is not from a frequently-used application package, the system package filename or the application package filename does not match any name in a specific name list, the package filename does not match a keyword in a specific keyword list, the package filename is not in a white list, the package filename is in a black list, the application package is predicted to be not used immediately after installation.

9. A computing system for policy-based compression of a machine code file, comprising:
a memory;
one or more processors; and
an interconnect coupled to the memory and the one or more processors,
wherein the one or more processors are adapted to:
generate the machine code file from bytecode by a virtual machine hosted in the computing system;
determine whether to compress the machine code file according to a set of conditions specified by a policy; and
in response to a determination that the set of conditions is satisfied, compress the machine code file to a compressed machine code file in the computing system.

10. The computing system of claim 9, wherein the one or more processors are further adapted to:
delete the machine code file from the computing system after compressing the machine code file when booting the computing system.

11. The computing system of claim 9, wherein the one or more processors are further adapted to:
delete the machine code file from the computing system after compressing the machine code file when installing an application package from which the bytecode is retrieved.

12. The computing system of claim 9, wherein the one or more processors are further adapted to:
determine whether the compressed machine code file is stored in the computing system when launching an application; and
decompress the compressed machine code file into the machine code for execution in response to a determination that the compressed machine code file is stored in the computing system.

13. The computing system of claim 12, wherein the one or more processors are further adapted to:
in response to a determination that the compressed machine code file is not stored in the computing system, retrieve the bytecode of the application from an application package before generating the machine code.

14. The computing system of any one of claims 9 to 13, wherein the computing system is a host computer, the one or more processors are further adapted to select the machine code file to be part of a system image for downloading to mobile devices.

15. The computing system of any one of claims 9 to 14, wherein the policy specifies the set of conditions including one or more of the following:
the machine code file is not from a specific system package, the machine code file is not from a frequently-used application package, the system package filename or the application package filename does not match any name in a specific name list, the package filename does not match a keyword in a specific keyword list, the package filename is not in a white list, the package filename is in a black list, the application package is predicted to be not used immediately after installation.
